(19) Europäisches Patentamt / European Patent Office / Office européen des brevets

(11) **EP 1 902 578 B1**

(12) **FASCICULE DE BREVET EUROPEEN**

(45) Date de publication et mention de la délivrance du brevet:
**03.09.2014 Bulletin 2014/36**

(21) Numéro de dépôt: **06778786.1**

(22) Date de dépôt: **05.07.2006**

(51) Int Cl.:
*H04M 9/00* (2006.01)      *H04M 9/08* (2006.01)
*H04M 1/60* (2006.01)

(86) Numéro de dépôt international:
**PCT/FR2006/001606**

(87) Numéro de publication internationale:
**WO 2007/006919 (18.01.2007 Gazette 2007/03)**

(54) **PROCEDE ET DISPOSITIF DE PRISE DE SON, NOTAMMENT DANS DES TERMINAUX TELEPHONIQUES EN "MAINS LIBRES"**

TONAUFNAHMEVERFAHREN UND -EINRICHTUNG INSBESONDERE FÜR FREIHÄNDIGE TELEFON-ENDGERÄTE

SOUND PICK-UP METHOD AND DEVICE FOR, IN PARTICULAR IN HANDSFREE TELEPHONE TERMINALS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **11.07.2005 FR 0507385**

(43) Date de publication de la demande:
**26.03.2008 Bulletin 2008/13**

(73) Titulaire: **Orange**
**75015 Paris (FR)**

(72) Inventeurs:
• **THOMAS, Jean-Philippe**
**F-22660 Le Trevou Treguignec (FR)**
• **AUVRAY, Monique**
**F-22300 Lannion (FR)**
• **DELEAM, David**
**F-22700 Perros-Guirec (FR)**

(74) Mandataire: **Cabinet Plasseraud**
**52, rue de la Victoire**
**75440 Paris Cedex 09 (FR)**

(56) Documents cités:
**WO-A-00/39991      US-A- 5 901 230**
**US-A- 6 125 179**

**Description**

L'invention concerne le traitement de signaux sonores, en particulier un traitement susceptible d'améliorer la prise de son, notamment dans des terminaux téléphoniques en *"mains libres",* ou encore dans les systèmes de visioconférence, dans les passerelles de voix sur IP (pour *"Internet Protocol"),* dans les centres d'appels téléphoniques, ou autres.

La prise de son pour les équipements d'audioconférence ou de visioconférence est difficile à réaliser dans le contexte dit de *"mains libres".* Le fonctionnement en mains libres pose un problème de dynamique pour les signaux traités. Typiquement, le niveau sur le microphone varie dans une très large plage. Cette forte variation de niveau est due notamment à l'éloignement ou au rapprochement du locuteur par rapport au microphone, ainsi qu'à la naturelle variété de puissance de parole entre individus.

Les cas les plus aigus sont ceux où les personnes utilisant l'équipement peuvent être situées soit très proches, soit très éloignées du ou des microphones. Dans le cas très proche, cette situation peut provoquer des saturations. Dans le cas très éloigné, elle peut provoquer la mauvaise prise de son pour la parole.

Pour corriger le problème des faibles niveaux, il existe des appareils électroniques du commerce, ou encore des versions logicielles de voix sur IP, proposant un contrôle automatique du niveau de prise de son. Ces dispositifs peuvent s'appliquer aux équipements de télécommunication. Beaucoup de systèmes antérieurs utilisent la variation de gain, en particulier un affaiblissement automatique du signal envoyé dans le réseau de télécommunication. Par exemple dans le document FR-2 841 721, on a proposé l'utilisation de la présence d'un signal sur un ou plusieurs haut-parleurs pour effectuer le calcul de la correction de gain (voir aussi WO 00/39991).

Il existe également des solutions sous forme de circuit intégré pour amplifier le signal audio. Toutefois, ces circuits ne tiennent pas compte d'un signal de référence comme tel que le signal alimentant le ou les haut-parleurs.

Le logiciel de voix sur IP *"Skype"* utilise une technique de contrôle automatique de gain sur le signal microphone. Cette technique n'est pas appliquée dans le contexte dit de *"multivoies"* (plusieurs microphones et/ou plusieurs haut-parleurs) et ne tient pas compte d'un signal de référence.

La présente invention vient améliorer la situation.

A cet effet, elle propose tout d'abord un procédé de traitement de signal pour améliorer la prise de son dans un équipement de téléphonie et/ou de visiophonie, ledit équipement comportant au moins un microphone et au moins un haut-parleur. Le procédé comporte les étapes suivantes :

β) on compare un signal issu du microphone à une valeur limite basse (THR_LOW), et

γ) on amplifie le signal issu du microphone si ledit signal issu du microphone est inférieur à la valeur limite basse.

Selon une définition préférée de l'invention, préalablement à l'étape de comparaison (3) :

α) on compare un signal destiné à alimenter le haut-parleur avec un seuil choisi ($BDF_d$),
l'application de l'étape γ) d'amplification du signal issu du microphone étant conditionnée par le résultat de la comparaison du signal destiné à alimenter le haut-parleur à l'étape α).

Ainsi, l'invention propose de détecter les niveaux considérés comme faibles de la parole captée par le (ou les) microphone(s), et d'appliquer un gain au signal de parole capté, mais tout en tenant compte des niveaux de parole diffusés par le (ou les) haut-parleur(s). Cette mesure permet alors de ne pas amplifier indûment le signal issu du haut-parleur, étant entendu qu'un couplage acoustique entre le haut-parleur et le microphone est toujours possible. En particulier, on vérifie ainsi l'absence ou un faible niveau de signal sonore sur le ou les haut-parleurs pour effectuer l'amplification, voire même pour amorcer les calculs de gain pour l'amplification, ce signal constituant alors une référence.

L'invention se différencie donc de l'art antérieur ci-avant essentiellement par l'application d'un gain et non pas d'un affaiblissement du signal issu du microphone et destiné à être envoyé dans le réseau de télécommunication, avec, en particulier, une prise en compte du ou des signaux sonores provenant du ou des haut-parleurs.

On comprendra alors que l'invention n'est pas spécialement destinée au masquage d'écho acoustique, mais plutôt à l'augmentation du signal de parole si ce dernier est faible pendant l'absence de signal sur le haut-parleur. On comprendra aussi que, sans tenir compte du signal d'alimentation du haut-parleur au sens de l'invention, on pourrait en revanche amplifier l'écho et, de là (typiquement dans un cas extrême), favoriser un effet Larsen, ce qui est à éviter, en principe.

Dans une réalisation préférentielle, le seuil choisi pour la mise en oeuvre de l'étape α) correspond à un niveau de bruit de fond mesuré sur le signal destiné à alimenter le haut-parleur. Avantageusement, on évite ainsi d'amplifier un signal de parole, en sus d'un bruit de fond dans le signal qu'alimente le haut-parleur, ce signal de parole étant alors susceptible d'être repris indûment par le ou les microphones de l'équipement.

Par ailleurs, on prévoit en outre une comparaison du signal issu du microphone avec un seuil correspondant à un niveau de bruit de fond local, tandis que la comparaison de l'étape β) avec la valeur limite basse est menée si le niveau du signal issu du microphone est supérieur à ce bruit de fond local. Avantageusement, on évite ici d'amplifier inutilement un bruit de fond local et on cherche plutôt à n'amplifier qu'un signal de parole. On prévoira ainsi la détection d'un niveau de bruit ambiant, local, par exemple de la pièce dans laquelle est installé l'équipement, pour ne pas amplifier le bruit local autour du ou des microphones, mais bien un signal de parole. On comprendra alors que dans le cas d'une pièce relativement bruyante, on peut utiliser avantageusement, avant de faire la détection de parole faible, un module de débruitage, ce qui va grandement améliorer l'efficacité du contrôle de gain sur le signal de parole. Ce débruitage peut être réalisé comme le propose le document FR-2 820 227. Le détecteur de bruit ambiant ne sera pas décrit ici. Néanmoins, celui du même document FR-2 820 227 peut être utilisé et convient bien aux applications envisagées de l'invention.

La présente invention vise aussi un dispositif de traitement de signal, pour la mise en oeuvre du procédé ci-avant, le dispositif étant destiné à un équipement de téléphonie et/ou de visiophonie comportant au moins un microphone et au moins un haut-parleur. Le dispositif comporte :

- un premier module de test pour comparer un signal issu du microphone à une valeur limite basse,

- un module d'amplification du signal issu du microphone si ledit signal issu du microphone est inférieur à la valeur limite basse,

- et, selon l'invention, un second module de test pour comparer un signal destiné à alimenter le haut-parleur avec un seuil choisi,

l'amplification du signal issu du microphone étant conditionnée par le résultat de la comparaison du signal destiné à alimenter le haut-parleur.

La présente invention vise aussi un produit programme d'ordinateur, destiné à être stocké dans une mémoire du dispositif ci-avant, et comportant :

- une instruction de test pour comparer un signal issu du microphone à une valeur limite basse,

- une instruction de calcul d'amplification du signal issu du microphone si ledit signal issu du microphone est inférieur à la valeur limite basse,

- et, selon l'invention, une instruction de test pour comparer un signal destiné à alimenter le haut-parleur avec un seuil choisi, conditionnant l'application du test sur ledit signal issu du microphone.

L'invention s'applique également dans le cas d'un traitement en multivoies, notamment pour une prise de son par plusieurs microphones.

D'ailleurs, d'autres caractéristiques et avantages de l'invention apparaîtront à l'examen de la description détaillée ci-après, et des dessins annexés sur lesquels :

- la figure 1 représente schématiquement un exemple de réalisation du dispositif selon l'invention,

- les figures 2A, 2B et 2C sont des organigrammes possibles d'un produit programme d'ordinateur pour la mise en oeuvre du procédé selon l'invention, et

- la figure 3 représente un traitement supplémentaire d'un couplage acoustique susceptible de générer un écho, dans une réalisation optionnelle avantageuse de l'invention.

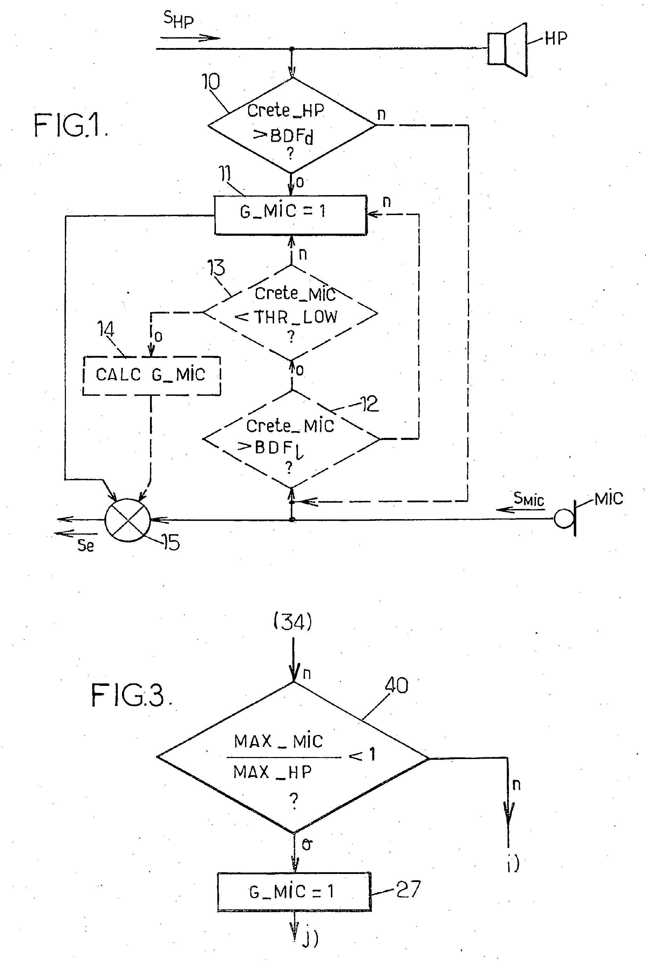

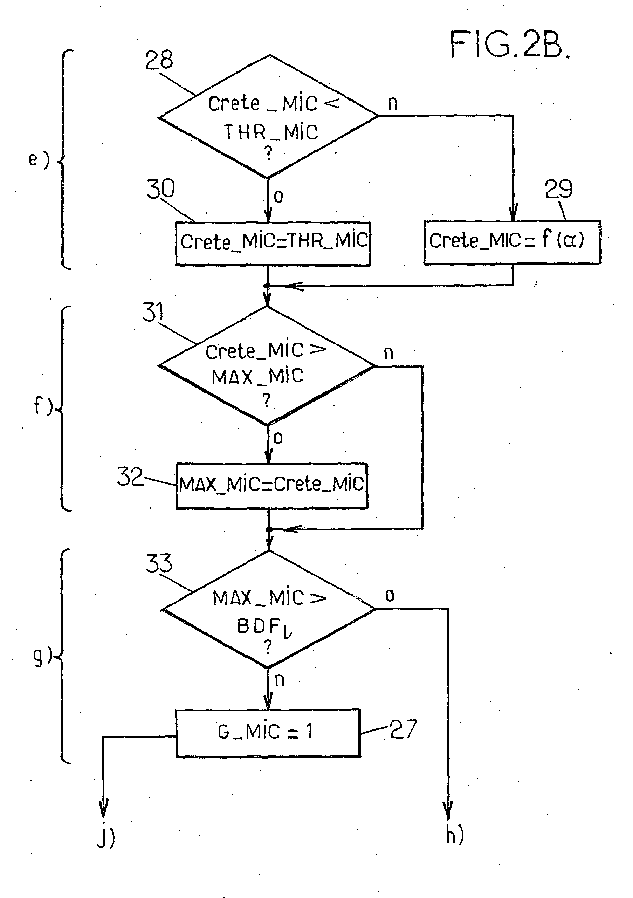

On se réfère tout d'abord à la figure 1, sur laquelle on a représenté un équipement local (en communication avec un équipement distant non représenté). L'équipement local comporte :

- un haut-parleur HP, alimenté par un signal $S_{HP}$, ce signal $S_{HP}$ correspondant sensiblement à un signal capté par l'équipement distant,
- un microphone MIC de l'équipement local, captant un signal $S_{MIC}$, et
- une chaîne de traitement (éléments 10 à 15) pour déterminer un gain G_MIC à appliquer (module 15) au signal $S_{MIC}$ issu du microphone MIC.

Le signal Se résultant de l'application de ce gain (sortie du module 15) est destiné à être envoyé, par exemple via un réseau de télécommunication (non représenté), à l'équipement distant.

Dans l'exemple représenté sur la figure 1, l'équipement local ne comporte qu'un microphone et un haut-parleur. Néanmoins, on comprendra que l'invention s'applique aussi bien à un équipement comportant plusieurs microphones et/ou plusieurs haut-parleurs. Dans ce cas, on parle alors d'un équipement "*multivoies*".

La chaîne de traitement illustrée sur la figure 1 peut se décrire comme suit.

Pour chaque haut-parleur d'un équipement éventuellement multivoies, on calcule, dans l'exemple décrit, les crêtes du signal diffusé, notées ici crete_HP. On comprendra ainsi que l'on utilise préférentiellement ici les niveaux de crêtes des signaux en tant que paramètres pour les comparaisons avec des seuils, comme énoncé ci-avant relativement aux étapes générales $\alpha$) et $\beta$).

On recherche, dans le cas multivoies, le haut-parleur ayant le signal crête le plus élevé. Ensuite, on estime un bruit de fond pour le signal alimentant le haut-parleur, dit "*bruit de fond distant*" (noté ici $BDF_d$) puisqu'il a été capté par l'équipement distant.

A l'étape 10, on compare alors le signal crête le plus élevé pour les haut-parleurs au niveau du bruit de fond distant estimé. Cette comparaison permet avantageusement de ne pas amplifier indûment le signal émis par le haut-parleur, au moins au-delà d'un bruit de fond normal.

Si le signal crête le plus élevé pour les haut-parleurs est supérieur (strictement supérieur) au bruit de fond distant estimé (flèche o en sortie du test 10), le gain G_MIC est fixé ou laissé à 1 (étape 11), ce qui ne correspond :

- ni à une amplification particulière,
- ni à une atténuation particulière.

En revanche, si le signal crête du haut-parleur est de l'ordre du bruit de fond (flèche n en sortie du test 10), on continue le reste du traitement, à savoir les étapes 12 à 14 décrites ci-après. On comprendra en particulier que ces étapes 12 à 14 ne sont déclenchées qu'en fonction du résultat du test 10 sur le niveau du signal de haut-parleur. A ce titre, ces étapes de la figure 1 sont représentées par des traits interrompus. On comprendra en particulier que l'amplification de l'étape 14 n'est pas exécutée si le signal destiné à alimenter le haut-parleur est supérieur au seuil choisi $BDF_d$.

Pour chaque microphone MIC, on calcule les crêtes du signal capté (crete_MIC). On recherche, dans le cas d'un équipement multivoies, le microphone ayant le signal crête le plus élevé et on compare ce signal crête le plus élevé au niveau du bruit de fond local $BDF_l$ (test 12) estimé sur ce même signal $S_{MIC}$. Si le signal crête est supérieur au bruit de fond (flèche o en sortie du test 12), on continue le traitement. Dans le cas contraire le gain est fixé ou laissé à 1 (flèche n en sortie du test 12). Cette comparaison permet avantageusement de ne pas amplifier le signal issu du microphone si ce dernier ne fait que capter simplement du bruit de fond local.

On compare ensuite le signal crête le plus élevé pour les microphones à un seuil THR_LOW (test 13). Ce seuil est considéré comme la limite des niveaux faibles. La comparaison faite au test 13 permet alors de ne pas saturer ou amplifier indûment le niveau du signal capté par le microphone. Si le niveau du signal du microphone est supérieur à ce seuil, le gain est fixé ou laissé à 1, car il n'a pas besoin d'être amplifié. En revanche, si le signal crête est inférieur à ce seuil (flèche o en sortie du test 13), on calcule le gain adéquat à appliquer à l'étape 14. Cette étape 14 de la figure 1 correspond à une phase de calcul de l'étape générale d'amplification $\gamma$) énoncée ci-avant. Ainsi, en termes généraux et en reprenant la notation des étapes $\alpha$), $\beta$) et $\gamma$) du procédé énoncé plus haut, l'étape $\alpha$) est menée avant l'étape $\beta$), et la comparaison de l'étape $\beta$), portant sur le signal issu du microphone, est conditionnée par la comparaison de l'étape $\alpha$), portant sur le signal destiné à alimenter le haut-parleur.

En particulier, le gain G_MIC qui est calculé est inversement proportionnel à la faiblesse du signal ou, en des termes plus généraux, on applique un gain d'amplification à l'étape $\gamma$) qui est inversement proportionnel au niveau du signal issu du microphone. En outre, dans l'exemple décrit ici, ce gain G_MIC est préférentiellement borné et lissé pour éviter de trop fort contraste de parole.

La figure 1 représente l'exemple de traitements dans le cas d'un microphone et d'un haut-parleur. Toutefois, ils s'appliquent de la même manière à un équipement comportant plusieurs microphones et/ou haut-parleurs. Ce type de traitement s'applique avantageusement aux systèmes de contrôle de l'audio pour les équipements en mains libres. Dans un terminal de télécommunication, on appliquera préférentiellement ces traitements en sortie d'un module de préamplification du signal issu du microphone.

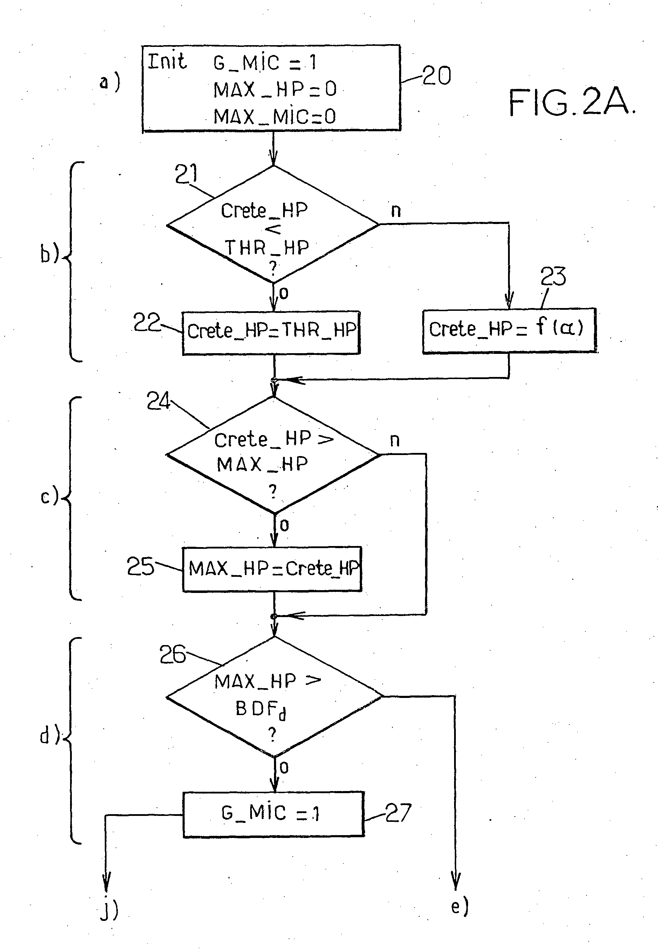

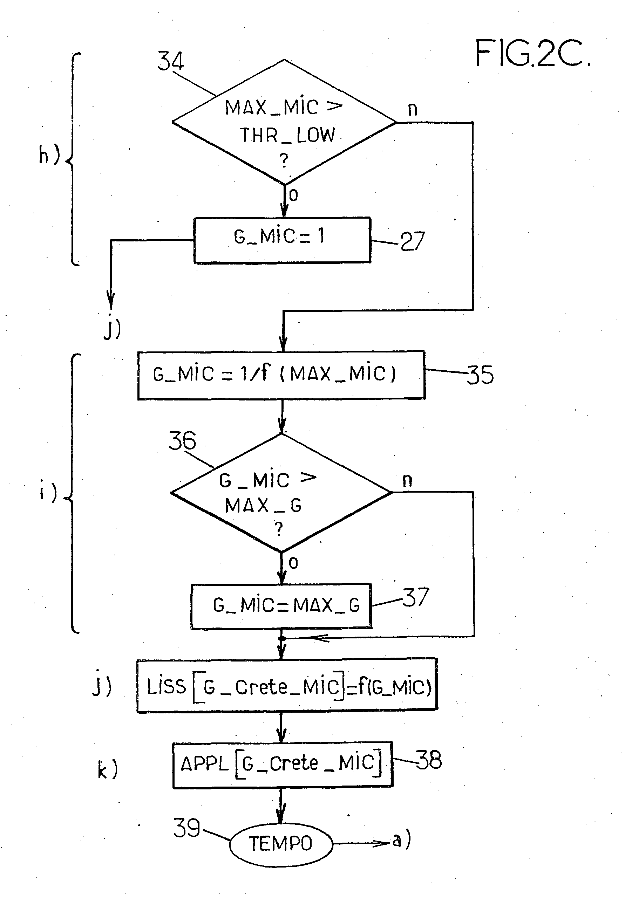

On se réfère maintenant aux figures 2A, 2B et 2C pour décrire en détail les étapes du procédé selon un exemple de réalisation préférentiel.

Le calcul visant à déterminer le gain à appliquer au signal issu du microphone est mené toutes les 32 millisecondes, ce qui correspond à la taille d'une mémoire tampon classique (ou "*buffer*") d'une carte son.

En se référant tout d'abord à la figure 2A, le procédé commence tout d'abord par une étape a) d'initialisation des variables utilisés pour les calculs (effectuée à la cadence du buffer).

On fixe alors les valeurs suivantes (instructions 20) :

- la valeur du gain courant G_MIC à appliquer au signal issu du ou des microphones est fixé d'abord à 1,
- la valeur d'une variable représentant le niveau de crête d'un signal issu de l'un des haut-parleurs et de plus haut niveau MAX_HP est fixée à 0,
- et la valeur d'une variable représentant la valeur de crête du signal capté par l'un des microphones et de plus haut niveau MAX_MIC est fixée à 0.

Une étape suivante b) vise le calcul des niveaux de crêtes des signaux haut-parleurs (à effectuer à la cadence de la taille du buffer).
Pour chaque haut-parleur, le test 21 compare le niveau de crête crete_HP à un seuil THR_HP qui peut être associé à ce haut-parleur.

Dans une réalisation avantageuse, le seuil THR_HP est fonction et correspond préférentiellement à la valeur d'un échantillon numérique courant du signal alimentant le haut-parleur.

Ici, si le niveau crete_HP est inférieur au seuil (flèche o en sortie du test 21), on affecte la valeur du seuil THR_HP au niveau de crête crete_HP (instruction 22). Sinon (flèche n en sortie du test 21), on applique avantageusement un lissage (instruction 23) de la valeur de crêtes par une fonction f($\alpha$) du type :

$$\text{crete\_HP} = \alpha \; * \; \text{crete\_HP} + (1 - \alpha) \; * \; \text{THR\_HP}$$

où, par exemple, $\alpha = 0,995$ et correspond à un facteur d'oubli. Cette valeur est avantageuse dans le cas où la fréquence d'échantillonnage est de 32 kHz et la taille du buffer de calcul de 32 ms.

Une étape suivante c) vise à rechercher le haut-parleur ayant les crêtes maximales, parmi une pluralité de haut-parleurs dans le cas d'un équipement en multivoies. Elle est menée préférentiellement à la cadence du buffer.
Pour chaque haut-parleur, si le niveau de crêtes est supérieur à un seuil maximal MAX_HP (flèche o en sortie du test 24), alors on fixe la valeur de ce seuil maximal au niveau de crêtes courant crete_HP (instruction 25). Sinon (flèche n en sortie du test 24), on continue le traitement.

Une étape suivante d) vise à comparer (test 26) les crêtes maximales pour les haut-parleurs au niveau d'un bruit de fond distant estimé, à la cadence du buffer. Si le maximum des crêtes relevé sur les signaux des haut-parleurs MAX_HP est supérieur au bruit de fond distant $BDF_d$ (flèche o en sortie du test 26), on fixe la valeur courante du gain G_MIC à appliquer au signal issu du microphone à 1 (instruction 27). Cette situation correspond au cas où le signal issu des haut-parleurs a un niveau supérieur au bruit de fond, tel qu'un signal de parole en sus d'un bruit de fond. On évitera donc d'amplifier le couplage d'un tel signal dans ce qui est capté par le(s) microphone(s).

En revanche, si le maximum précité MAX_HP est du niveau du bruit de fond distant (flèche n en sortie du test 26), le procédé se poursuit par des tests sur les signaux issus des micorphones, comme on le verra ci-après en référence à la figure 2B. On indique ici que la valeur $BDF_d$ à laquelle est comparé le maximum relevé MAX_HP est représentative du bruit de fond distant, à une plage de tolérance près (par exemple $BDF_d + \delta$).

On comprendra alors que les étapes b) à d) décrites en détail ci-avant correspondent globalement au test 10 de la figure 1.

On se réfère maintenant à la figure 2B pour décrire ensuite un traitement similaire, appliqué aux signaux issus des microphones, et correspondant globalement au test 12 de la figure 1.

Le traitement commence par une étape e) de calcul des crêtes des signaux issus des microphones (effectuée à la cadence de la taille du buffer).

Pour chaque microphone, le test 28 compare le niveau de crête crete_MIC à un seuil THR_MIC qui peut être associé à ce microphone. Dans une réalisation avantageuse, ce seuil THR_HP est fonction et correspond préférentiellement à la valeur d'un échantillon numérique courant du signal issu du microphone.

Ici, si le niveau crete_MIC est inférieur au seuil (flèche o en sortie du test 28), on affecte la valeur du seuil THR_MIC au niveau de crête crete_MIC (instruction 30). Sinon (flèche n en sortie du test 28), on applique un lissage (instruction 29) de la valeur de crêtes par une fonction f($\alpha$) du type :

$$\text{crete\_MIC} = \alpha \; * \; \text{crete\_MIC} + (1 - \alpha) \; * \; \text{THR\_MIC}$$

où, par exemple, $\alpha = 0,995$ et correspond à un facteur d'oubli.

Une étape suivante f) vise à rechercher le microphone qui délivre le signal ayant les crêtes maximales, parmi une pluralité de microphones dans le cas d'un équipement en multivoies. Elle est menée préférentiellement à la cadence du buffer.
Pour chaque microphone, si le niveau de crêtes est supérieur à un seuil maximal MAX_MIC (flèche o en sortie du test 31), alors on fixe la valeur de ce seuil maximal au niveau de crêtes courant crete_MIC (instruction 32). Sinon (flèche n en sortie du test 31), on continue le traitement.

Une étape suivante g) vise à comparer (test 33) les crêtes maximales pour les microphones au niveau d'un bruit de fond local estimé sur les signaux captés, à la cadence du buffer. Si le maximum des crêtes relevé sur les signaux des microphones MAX_MIC est supérieur au bruit de fond local BDF$_l$ (flèche o en sortie du test 33), on poursuit le traitement par l'étape h) de la figure 2C. Cette situation correspond au cas où le signal issu des microphones a un niveau supérieur au bruit de fond local, tel qu'un signal de parole en sus d'un bruit de fond. Bien entendu, on va rechercher, surtout dans ce cas, à amplifier le signal capté par les microphones, pour amplifier en réalité le signal de parole, en particulier si ce signal reste assez faible comme on le verra en référence à la description de l'étape h) ci-après.

En revanche, si le maximum des crêtes relevé sur les signaux des microphones MAX_MIC est inférieur ou équivalent (en réalité équivalent à une plage de tolérance près) au bruit de fond local BDF$_l$ (flèche n en sortie du test 33), on fixe la valeur courante du gain G_MIC à appliquer au signal issu du microphone à 1 (instruction 27).

On comprendra que ces étapes e) à g) ci-avant correspondent globalement au test 12 de la figure 1.

On remarquera aussi que de manière générale, dans les étapes b), c) et d) comme dans les étapes e), f), g) et h), lorsque l'équipement comporte une pluralité de microphones et/ou de haut-parleurs, c'est le signal maximal MAX_MIC et/ou MAX_HP, parmi les signaux issus des microphones et/ou destinés à alimenter les haut-parleurs, qui est préférentiellement comparé avec la valeur limite basse THR_LOW de l'étape β) (ou encore avec le bruit de fond local BDF$_l$ comme à l'étape g)) et/ou avec le seuil dé l'étape α) correspondant au bruit de fond distant BDF$_d$, respectivement.

En référence maintenant à la figure 2C, l'étape h) est menée si un signal capté par le(s) microphone(s) a été détecté comme étant supérieur à un bruit de fond local (flèche o en sortie du test 33). Cette étape h) consiste maintenant à comparer les crêtes maximales pour les signaux issus des microphones à un seuil de niveau faible THR_LOW. L'étape h) est menée à la cadence du buffer. Elle correspond au test 13 de la figure 1 et vérifie donc si le signal issu des microphones a réellement besoin d'être amplifié ou non, de manière à ne pas saturer ou amplifier indûment ce signal.

Si les crêtes maximales des signaux de microphones sont supérieures au seuil de niveau faible (flèche o en sortie du test 34), les signaux de microphones n'ont pas besoin d'être amplifiés et le gain courant G_MIC est fixé ou laissé à 1 (instruction 27).

Par exemple, en traitement numérique des signaux captés, si un convertisseur analogique/numérique a un maximum de 32767 (soit 15 niveaux binaires avec 32767 =$2^{15}$-1), on peut fixer le seuil THR_LOW à une valeur de 300.

Un réglage moyen ayant été aligné sur les spécifications de téléphonométrie, des tests empiriques ont montré, pour l'application de la présente invention, qu'une valeur maximale des crêtes autour de 300 correspondait à un début de niveau faible.

Sinon (flèche n en sortie du test 34), on continue le traitement par l'étape i) au cours de laquelle on calcule effectivement le gain courant à appliquer aux signaux des microphones. Cette étape est menée à la cadence du buffer.

Un exemple de réalisation consiste à appliquer (instruction 35) la formule de calcul suivante :

$$G\_MIC = (300 * 300)/(MAX\_MIC * MAX\_MIC)$$

Ainsi, dans l'exemple, le gain est préférentiellement élevé au carré pour offrir un meilleur ressenti sonore de l'amplification. De façon plus générale, on retiendra simplement que le gain caluclé est inversement proportionnel au maximum des crêtes sur les signaux des microphones.

On cherche en outre à borner le gain calculé pour éviter des variations trop brutales, en appliquant le test 36 comparant le gain caluclé à une valeur maximale MAX_G, fixée par exemple à 10.

Ainsi, si le gain courant est supérieur à 10 (flèche o en sortie du test 36), on fixe la valeur du gain courant à 10 (instruction 37). Sinon (flèche n en sortie du test 36), on continue directement le traitement par l'étape de lissage suivante référencée j).

On indique déjà que la suite de l'instruction 27 où la valeur du gain est fixée à 1 se poursuit généralement par cette étape j) au cours de laquelle on calcule un gain de crête à appliquer sur les signaux des microphones. Cette étape est aussi menée à la cadence du buffer.

L'étape j) de lissage s'effectue préférentiellement comme suit.

Si le gain de crête est inférieur au gain courant calculé à l'étape i) ou fixé à la valeur 1 selon l'instruction 27, on détermine alors la valeur de gain de crête G_crete_MIC comme suit:

$$G\_crete\_MIC = \alpha_1 * G\_crete\_MIC + (1 - \alpha_1) * G\_MIC$$

Sinon, la valeur attribuée au gain de crête est donnée par :

$$G\_crete\_MIC = \alpha_2 * G\_crete\_MIC + (1 - \alpha_2) * G\_MIC$$

Le facteur d'oubli $\alpha_1$ est préférentiellement fixé à 0,925, tandis que le facteur d'oubli $\alpha_2$ est préférentiellement fixé à 0,75, pour un lissage satisfaisant du gain crête. Ces valeurs sont données dans l'exemple décrit où la fréquence d'échantillonnage est de 32 kHz et la taille du buffer de calcul de 32 ms.

L'étape j) correspond donc à un lissage dysimétrique pour éviter d'amplifier des bruits impulsifs de faible niveau. Ces bruits impulsifs peuvent gêner fortement la communication s'ils sont amplifiés.

Le traitement se poursuit bien entendu par l'application du gain crête aux signaux issus des microphones à l'étape k), en particulier à l'échantillon numérique Ech $MIC_j$ issu de chaque microphone $MIC_j$, selon une formule du type (instruction 38) :

$$Ech\ MIC_j = G\_crete\_MIC * Ech\ MIC_j$$

Si nécessaire, on applique ensuite une temporsiation (instruction 39) pour opérer à la cadence définie par la fréquence d'échantillonnage de 32 kHz et la taille du buffer de calcul de 32 ms, avant de recommencer le traitement à l'étape a) pour les échantillons suivants.

Dans certaines conditions (positions et directivités des microphones), il peut être avantageux de prévoir un traitement supplémentaire, tel que celui représenté sur la figure 3, pour éviter qu'un signal d'écho soit amplifié comme un signal de parole locale faible. Le traitement de la figure 3 vise à pallier le problème d'un couplage acoustique haut-parleur/microphone (fortement négatif dans l'exemple décrit) et induisant un écho. Il est alors ajouté une condition supplémentaire 40 avant le calcul du gain courant. Dans le cas d'un couplage acoustique moins négatif, voire positif, une telle condition n'est plus utile.

En se référant à la figure 3, on prévoit le test supplémentaire 40 sur la sortie n du test 34 de l'étape h) (si le maximum des crêtes est inférieur au seuil de niveau bas THR_LOW). Si le rapport des maxima de crêtes des signaux de microphones, d'une part, et des signaux de haut-parleurs, d'autre part, est inférieur à 1 (flèche o en sortie du test 40), le gain courant est fixé à 1 (instruction 27) et le procédé se poursuit directement par l'étape de lissage j). Sinon (flèche n en sortie du test 40), on évalue le gain à appliquer G_MIC à l'étape i) comme décrit ci-avant.

En termes plus généraux, on détecte un couplage acoustique entre le haut-parleur et le microphone, susceptible d'induire un écho, pour adapter l'amplification de l'étape $\gamma$) énoncée plus haut. Avantageusement, en tenant compte ainsi de l'écho acoustique, en particulier dans des équipements en mains libres, on résout un problème souvent résiduel dans de tels équipements.

Bien entendu, la présente invention ne se limite pas à la forme de réalisation décrite ci-avant à titre d'exemple ; elle s'étend à d'autres variantes.

Par exemple, on a décrit ci-avant la recherche de maxima sur les signaux crêtes et comparaison avec un niveau de bruit de fond. Toutefois, un autre paramètre que les maxima de signaux crêtes aurait pu être à la base des calculs décrits en détail en référence aux figures 2A, 2B et 2C. Par exemple, la moyenne des signaux crêtes aurait été un paramètre donnant, au final, des résultats de même nature.

## Revendications

1. Procédé de traitement de signal pour améliorer la prise de son dans un équipement de téléphonie et/ou de visiophonie, ledit équipement comportant au moins un microphone et au moins un haut-parleur, procédé dans lequel :

   $\beta$) on compare un signal issu du microphone à une valeur limite basse (THR_LOW), et
   $\gamma$) on amplifie le signal issu du microphone si ledit signal issu du microphone est inférieur à la valeur limite basse,
   **caractérisé en ce que**, préalablement à l'étape de comparaison $\beta$) :

   $\alpha$) on compare un signal destiné à alimenter le haut-parleur avec un seuil choisi ($BDF_d$),

   et **en ce que** l'application de l'étape $\gamma$) d'amplification du signal issu du microphone est conditionnée par le résultat de la comparaison du signal destiné à alimenter le haut-parleur à l'étape $\alpha$)

et **caractérisé en ce que** l'étape $\alpha$) est menée avant l'étape $\beta$), et **en ce que** la comparaison de l'étape $\beta$), portant sur le signal issu du microphone, est conditionnée par la comparaison de l'étape $\alpha$), portant sur le signal destiné à alimenter le haut-parleur.

2. Procédé selon la revendication 1, **caractérisé en ce que** l'amplification de l'étape $\gamma$) n'est pas exécutée si le signal destiné à alimenter le haut-parleur est supérieur audit seuil choisi (BDF$_d$).

3. Procédé selon la revendication 2, **caractérisé en ce que** ledit seuil choisi correspond à un niveau de bruit de fond mesuré sur le signal destiné à alimenter le haut-parleur.

4. Procédé selon l'une des revendications précédentes, **caractérisé en ce qu'**il comporte une étape de comparaison du signal issu du microphone avec un seuil correspondant à un niveau de bruit de fond local (BDF$_l$), tandis que la comparaison de l'étape $\beta$) avec la valeur limite basse (THR_LOW) est menée si le niveau du signal issu du microphone est supérieur audit bruit de fond local.

5. Procédé selon l'une des revendications précédentes, dans lequel ledit équipement comporte une pluralité de microphones et/ou de haut-parleurs, **caractérisé en ce que** le signal maximal, parmi les signaux issus des microphones et/ou destinés à alimenter les haut-parleurs, est comparé avec la valeur limite basse de l'étape $\beta$) et/ou avec ledit seuil de l'étape $\alpha$), respectivement.

6. Procédé selon l'une des revendications précédentes, **caractérisé en ce que** des niveaux de crêtes des signaux sont utilisés comme paramètres pour les comparaisons des étapes $\alpha$) et $\beta$).

7. Procédé selon l'une des revendications précédentes, **caractérisé en ce que** l'on détecte un couplage acoustique entre le haut-parleur et le microphone, susceptible d'induire un écho (40), pour adapter l'amplification de l'étape $\gamma$).

8. Procédé selon l'une des revendications précédentes, **caractérisé en ce que** l'on applique un gain d'amplification à l'étape $\gamma$) inversement proportionnel au niveau du signal issu du microphone.

9. Dispositif de traitement de signal, **caractérisé en ce qu'**il comporte des moyens adaptés à la mise en oeuvre du procédé selon l'une des revendications précédentes.

10. Produit programme d'ordinateur, **caractérisé en ce qu'**il comporte des instructions adaptées à la mise en oeuvre du procédé selon l'une des revendications 1 à 8.

11. Equipement de télécommunication comportant un dispositif selon la revendication 9.

**Patentansprüche**

1. Signalverarbeitungsverfahren zum Verbessern der Tonerfassung in einer Telephon- und/oder Videophonie-Anlage, wobei die Anlage wenigstens ein Mikrophon und wenigstens einen Lautsprecher enthält, wobei in dem Verfahren:

$\beta$) ein von dem Mikrophon stammendes Signal mit einem unteren Grenzwert (THR_LOW) verglichen wird, und $\gamma$) das von dem Mikrophon stammende Signal verstärkt wird, falls das von dem Mikrophon stammende Signal kleiner als der untere Grenzwert ist,

**dadurch gekennzeichnet, dass** vor dem Vergleichsschritt $\beta$):

$\alpha$) ein Signal, das dafür vorgesehen ist, zu dem Lautsprecher geschickt zu werden, mit einem ausgewählten Schwellenwert (BDF$_d$) verglichen wird,

und dass die Anwendung des Schrittes $\gamma$) zum Verstärken des von dem Mikrophon stammenden Signals durch das Ergebnis des Vergleichs im Schritt $\alpha$) des Signals, das dazu bestimmt ist, zu dem Lautsprecher geschickt zu werden, bedingt ist, und **dadurch gekennzeichnet, dass** der Schritt $\alpha$) vor dem Schritt $\beta$) vorgesehen ist und dass der Vergleich des Schrittes β), der sich auf das von dem Mikrophon stammende Signal stützt, durch den Vergleich des Schrittes α), der sich auf das Signal stützt, das dazu bestimmt ist, zu dem Lautsprecher geschickt zu werden, bedingt ist.

2. Verfahren nach Anspruch 1, **dadurch gekennzeichnet, dass** das Verstärken des Schrittes γ) nicht ausgeführt wird, wenn das Signal, das dazu bestimmt ist, zu dem Lautsprecher geschickt zu werden, größer als der ausgewählte Schwellenwert ($BDF_d$) ist.

3. Verfahren nach Anspruch 2, **dadurch gekennzeichnet, dass** der ausgewählte Schwellenwert einem Grundrauschpegel entspricht, der an dem Signal gemessen wird, das dazu bestimmt ist, zu dem Lautsprecher geschickt zu werden.

4. Verfahren nach einem der vorhergehenden Ansprüche, **dadurch gekennzeichnet, dass** es einen Schritt des Vergleichens des von dem Mikrophon stammenden Signals mit einem Schwellenwert, der einem lokalen Grundrauschpegel ($BDF_l$) entspricht, umfasst, während der Vergleich des Schrittes β) mit dem unteren Grenzwert (THR_LOW) vorgesehen ist, wenn der Pegel des von dem Mikrophon stammenden Signals das lokale Grundrauschen ist.

5. Verfahren nach einem der vorhergehenden Ansprüche, wobei die Anlage mehrere Mikrophone und/oder Lautsprecher enthält, **dadurch gekennzeichnet, dass** das maximale Signal unter den von den Mikrophonen stammenden Signalen und/oder den Signalen, die dazu bestimmt sind, zu den Lautsprechern geschickt zu werden, mit dem unteren Grenzwert des Schrittes β) und/oder mit dem Schwellenwert des Schrittes α) verglichen wird.

6. Verfahren nach einem der vorhergehenden Ansprüche, **dadurch gekennzeichnet, dass** die Pegel der Spitzen der Signale als Parameter für die Vergleiche der Schritte α) und β) verwendet werden.

7. Verfahren nach einem der vorhergehenden Ansprüche, **dadurch gekennzeichnet, dass** eine akustische Kopplung zwischen dem Lautsprecher und dem Mikrophon, die ein Echo (40) einführen kann, detektiert wird, um die Verstärkung des Schrittes γ) anzupassen.

8. Verfahren nach einem der vorhergehenden Ansprüche, **dadurch gekennzeichnet, dass** ein Verstärkungsfaktor im Schritt γ), der zu dem Pegel des von dem Mikrophon stammenden Signals umgekehrt proportional ist, angewendet wird.

9. Signalverarbeitungsvorrichtung, **dadurch gekennzeichnet, dass** sie Mittel umfasst, die dazu ausgelegt sind, das Verfahren nach einem der vorhergehenden Ansprüche auszuführen.

10. Computerprogrammprodukt,
**dadurch gekennzeichnet, dass** es Befehle enthält, die dafür ausgelegt sind, das Verfahren nach einem der Ansprüche 1 bis 8 auszuführen.

11. Telekommunikationsanlage, die eine Vorrichtung nach Anspruch 9 enthält.


**Claims**

1. Signal processing method for improving sound pickup in an item of telephone and/or videophone equipment, said item of equipment comprising at least one microphone and at least one loudspeaker,
in which method:

   β) a signal arising from the microphone is compared with a low limit value (THR_LOW), and
   γ) the signal arising from the microphone is amplified if said signal arising from the microphone is below the low limit value,

   **characterized in that**, prior to the comparison step β) :

   α) a signal intended to feed the loudspeaker is compared with a chosen threshold ($BDF_d$),

   and **in that** the application of step γ) of amplifying the signal arising from the microphone is conditioned by the result of the comparison of the signal intended to feed the loudspeaker in step α)

and **characterized in that** step $\alpha$) is conducted before step $\beta$), and **in that** the comparison of step $\beta$), pertaining to the signal arising from the microphone, is conditioned by the comparison of step $\alpha$), pertaining to the signal intended to feed the loudspeaker.

2. Method according to Claim 1, **characterized in that** the amplification of step $\gamma$) is not executed if the signal intended to feed the loudspeaker is above said chosen threshold ($BDF_d$).

3. Method according to Claim 2, **characterized in that** said chosen threshold corresponds to a level of background noise measured on the signal intended to feed the loudspeaker.

4. Method according to one of the preceding claims, **characterized in that** it comprises a step of comparing the signal arising from the microphone with a threshold corresponding to a level of local background noise ($BDF_l$), while the comparison of step $\beta$) with the low limit value (THR_LOW) is conducted if the level of the signal arising from the microphone is above said local background noise.

5. Method according to one of the preceding claims, in which said item of equipment comprises a plurality of microphones and/or of loudspeakers, **characterized in that** the maximum signal, among the signals arising from the microphones and/or intended to feed the loudspeakers, is compared with the low limit value of step $\beta$) and/or with said threshold of step $\alpha$), respectively.

6. Method according to one of the preceding claims, **characterized in that** levels of peaks of the signals are used as parameters for the comparisons of steps $\alpha$) and $\beta$).

7. Method according to one of the preceding claims, **characterized in that** an acoustic coupling between the loudspeaker and the microphone, liable to induce an echo (40), is detected in order to adapt the amplification of step $\gamma$).

8. Method according to one of the preceding claims, **characterized in that** an amplification gain is applied in step $\gamma$), said amplification gain being inversely proportional to the level of the signal arising from the microphone.

9. Signal processing device, **characterized in that** it comprises means suitable for the implementation of the method according to one of the preceding claims.

10. Computer program product, **characterized in that** it comprises instructions suitable for the implementation of the method according to one of Claims 1 to 8.

11. Item of telecommunication equipment comprising a device according to Claim 9.

FIG.1.

FIG.3.

FIG.2A.

a) 

Init $G\_MIC = 1$
$MAX\_HP = 0$
$MAX\_MIC = 0$
— 20

b) {

21

$Crete\_HP < THR\_HP$ ?

n

0

22 — $Crete\_HP = THR\_HP$

23

$Crete\_HP = f(\alpha)$

c) {

24

$Crete\_HP > MAX\_HP$ ?

n

0

25 — $MAX\_HP = Crete\_HP$

d) {

26

$MAX\_HP > BDF_d$ ?

0

$G\_MIC = 1$ — 27

j)

e)

FIG.2B.

FIG.2C.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2841721
- WO 0039991 A

- FR 2820227